# EUROPÄISCHE PATENTANMELDUNG

(11) **EP 1 593 352 A1**
(43) Veröffentlichungstag der Anmeldung: **09.11.2005**
(21) Anmeldenummer: 05009869.8
(22) Anmeldetag: 06.05.2005
(51) Int. Cl.: A61C 5/12

(54) **Zahnkeile**

(30) Priorität: 08.05.2004 DE 102004022778
(71) Anmelder: Schaffner, Alfred, 6805 Mezzovico (CH)
(72) Erfinder: Schaffner, Alfred, 6805 Mezzovico (CH); Borer, Gerold, Dr.med.dent., 6045 Meggen (CH); Goldman, Richard B., Dr., Smithtown, New York (US)
(74) Vertreter: Ebert, Jutta

(57) **Zusammenfassung**

Es wird ein Zahnkeil zur Verwendung bei der zahnmedizinischen Behandlung und Restauration kariöser Hohlräume zwischen benachbarten Zähnen mit einem dreieckigen Querschnitt und zu einer gerundeten Spitze (2) auslaufendem freien Ende vorgeschlagen, der an seinem von der Spitze (2) abgewandten Ende übergeht in ein sich kegelstumpfförmig oder pyramidenstumpfförmig weitendes Endstück (6), an dem Eingriffsflächen für eine Pinzette (12) oder ein anderes geeignetes, zahnärztliches Greifinstrument ausgebildet sind. Dabei ist der Keil (1) säbelförmig nach oben gebogen, seine Basisfläche (3) und seine Seitenflächen (4) sind konkav nach innen gewölbt, die Stoßkanten (5) der Basisfläche (3) und der Seitenflächen (4) sind abgerundet, und er weist einen ersten, längeren Keilabschnitt (1a) und einen zweiten, kürzeren Keilabschnitt (1b) auf, wobei die Stoßkanten (5) zwischen der Basisfläche (3) und den Seitenflächen (4) im ersten Keilabschnitt (1a) zueinander parallel verlaufen und erst im zweiten Keilabschnitt (1b) zur freien, nach oben gebogenen Spitze (2) des Keils (1) aufeinander zulaufen (Fig. 9).

## Beschreibung

Die Erfindung bezieht sich auf Zahnkeile zur Verwendung bei der zahnmedizinischen Behandlung und Restauration kariöser Hohlräume zwischen benachbarten Zähnen.

Wenn der Teil eines Zahnes zu restaurieren ist, der vor dem Befall mit Karies einen benachbarten Zahn berührt hat, ist es erforderlich, das Füllmaterial während des Einbringens in den Hohlraum und der anschließenden Aushärtung einzugrenzen und abzustützen, damit es sich exakt dem gesunden Teil des Zahnes anpassen kann. Dazu ist es üblich, ein Matrizenband um den zu behandelnden Zahn zu legen und festzuziehen, damit dieses den zerstörten Teil der Zahnwand während der Behandlung sozusagen ersetzen kann. Damit das Matrizenband seine Funktion erfüllen kann, muss es so soweit als möglich der Form des Zahnes angenähert und in dieser Position fixiert werden, so dass das eingebrachte Füllmaterial schließlich der Außenfläche des gesunden Zahnes entspricht und nicht übersteht und sich Nischen bilden können, die erneut die Bildung von Karies begünstigen. Zu diesem Zweck wird ein Zahnkeil zwischen die benachbarten Zähne und das Zahnfleisch gedrückt, der das Matrizenband gegen den zu behandelnden Zahn drückt und festkeilt und gleichzeitig auch die Zähne etwas auseinander drückt. Damit wird erreicht, dass, wenn nach abgeschlossener Behandlung das Matrizenband wieder entfernt wird, die Zähne sich wieder gegenseitig abstützen können, indem sie in ihre Ausgangslage zurückkehren und nicht der vom Matrizenband zuvor beanspruchte Raum als Lücke oder Spalt bestehen bleibt. Zahnkeile haben typischerweise eine konische, langgestreckte Form und einen dreieckigen oder auch V-förmigen Querschnitt. Während einer Zahnbehandlung muss der Zahnkeil in seiner Stellung zwischen zwei Zähnen absolut unverrückbar sein und muss deshalb mit Kraft, d.h. üblicherweise mit Hilfe eines speziellen Instruments, zwischen die Zähne gepresst werden, bis er dort durch Reibung in Position gehalten wird. Auch werden die Zahnkeile in verschiedenen Größen angeboten, damit eine der jeweiligen Anatomie entsprechende Auswahl getroffen werden kann.

Das US-Patent 6,074,210 beschreibt Zahnkeile, deren Seitenansicht einem langgestreckten, spitz zulaufenden Dreieck und deren Querschnitt einem umgedrehten V gleicht, also nach unten, wo der Zahnkeil mit der Interdentalpapille in Berührung kommt, offen ist. Indem so die Seitenwände eine größere Elastizität erhalten, soll das Einführen der Zahnkeile zwischen zwei Zähne erleichtert, ihr Halt dort verbessert und eine möglichst exakte Anpassung an die Form der Zähne, auch an Kavitäten, sowie eine Rückstellung nach der Entnahme am Ende der Behandlung erreicht werden. Die Seitenflächen sollen strukturiert sein, indem sie mit einer Riffelung oder mit Einkerbungen versehen sind. Dadurch soll ihr Halt zwischen den Zähnen nochmals gesteigert werden. An ihrem von der Spitze abgewandten, breiten Ende weisen die Zahnkeile einen würfelförmigen Fortsatz auf, an dem sie mit einem geeigneten Instrument, z.B. einer Zange, ergriffen werden und zwischen zwei Zähne mit ausreichend Kraft eingepresst werden können, um den erforderlichen Halt zu finden. Die beiden unteren Längskanten sind auf etwa halber Länge stumpf abgewinkelt, wodurch eine bessere Anpassung an die Anatomie eines Patienten erreicht werden soll.

Nachteilig an diesen Zahnkeilen ist, dass durch die nach unten offene Form der Keileffekt gemindert wird. Riffelungen oder Einkerbungen an den Seitenflächen wirken einer optimalen Anpassung an die in jedem Behandlungsfall verschiedenen anatomischen Gegebenheiten entgegen. Auch dass für das Einführen der Zahnkeile eine besondere Zange benötigt wird, wird als nachteilig empfunden.

Dieser letztgenannte Nachteil wird mit der US-Patentanmeldung 2004/0014006 A1 vermieden, wonach vorgeschlagen wird, jeden Zahnkeil über eine Einschnürung mit einem angeformten Betätigungsstab zu versehen, also beide Teile einstückig auszubilden. Für die Betätigung kann der Stab an der Einschürung bei Bedarf abgewinkelt oder abgebogen werden. Nach dem Einpressen des Zahnkeils in den Zahnzwischenraum wird der Betätigungsstab abgebrochen und weggeworfen. Dies bedeutet eine enorme Materialverschwendung; der Betätigungsstab muss im Vergleich zum eigentlichen Zahnkeil verhältnismäßig lang und auch kräftig ausgebildet sein, damit mit ihm die erforderliche Kraft auf den Zahnkeil beim Einpressen ausgeübt werden kann. Dass sich der Betätigungsstab an der Einschnürung abwinkeln oder abbiegen lässt, kann sich als Nachteil erweisen, da dabei der Kraftvektor in Schubrichtung vermindert wird.

Der Zahnkeil selbst besteht aus zwei Abschnitten mit unterschiedlicher Querschnittsform. Der Querschnitt des ersten, vorderen Abschnitts hat die Form eines Dreiecks, wobei die Seitenflächen konkav nach innen gewölbt sind und in Längsrichtung zu einer abgerundeten Spitze aufeinander zulaufen und die Spitze nach oben gebogen ist. Am von der Spitze abgewandten Ende dieses Abschnitts geht der Keil über in einen Abschnitt mit trapezoidem Querschnitt. Dieser Abschnitt soll beim Einführen in den Zahnzwischenraum die Zähne zusätzlich spreizen. Daran schließt sich ebenfalls durch eine Einschnürung abgesetzt noch ein bevorzugt quaderförmiger Fortsatz an, an den schließlich der oben erwähnte Betätigungsstab angeformt ist. An dem quaderförmigen Fortsatz kann der Keil nach der Zahnbehandlung, nachdem der Betätigungsstab zuvor abgebrochen wurde, mit einer Zange ergriffen und entfernt werden. Das bedeutet, auch nach diesem Vorschlag eines Zahnkeils mit angeformtem aber abbrechbarem Betätigungsstab, kommt der Zahnarzt letztlich nicht ohne ein weiteres Instrument aus, und es ist der erwähnte Fortsatz als Verbindungsstück zwischen dem eigentlichen Zahnkeil und dem Betätigungsstab notwendig. Die Gesamtform mit den unterschiedlichen Abschnitten und Teilen wird damit kompliziert und aufwendig in der Herstellung.

Aufgabe der Erfindung ist es, einen Zahnkeil zu schaffen, der noch besser anatomisch aber dennoch einfach geformt und möglichst unkompliziert in der Herstellung ist und der mit einem Instrument, das der Zahnarzt ohnehin zur Hand hat, vorzugsweise einer Pinzette, in einfacher Weise aber mit der für einen sicheren Halt erforderlichen Kraft in den Zahnzwischenraum eingeführt werden kann. Dort soll er sich möglichst optimal an jede mögliche Zahnform, an vorhandene Kavitäten und z.B. auch subgingivale Füllungsränder unter möglichster Schonung der Papille anpassen können.

Erfindungsgemäß wird dies dadurch erreicht, dass der Keil an seinem von der Spitze abgewandten Ende übergeht in ein sich kegelstumpfförmig oder pyramidenstumpfförmig weitendes Endstück, an dem Eingriffsflächen für eine Pinzette oder ein anderes geeignetes, zahnärztliches Greifinstrument ausgebildet sind.

Indem so auf besondere Fortsätze, an denen der Keil erfasst werden kann, verzichtet wird, erhält der Zahnkeil eine verhältnismäßig einfache Gesamtform, die sich kostensenkend bei der Herstellung und beim Materialverbrauch auswirkt. Gleichzeitig zeichnet er sich durch eine einfache Handhabung aus, indem der behandelnde Zahnarzt den Zahnkeil mit einem Instrument, das er ohnedies zur Hand hat, an den vorgesehenen Eingriffsflächen sicher und fest fassen und exakt plazieren kann.
Eine besonders vorteilhafte Ausführungsform des Zahnkeiles weist außerdem die folgenden Merkmale in Kombination auf:
- der Keil ist säbelförmig nach oben gebogen,
- die Basisfläche und die Seitenflächen des Keils sind konkav nach innen gewölbt,
- die Stoßkanten der Basisfläche und der Seitenflächen des Keils sind abgerundet,
- der Keil weist einen ersten, längeren Keilabschnitt und einen zweiten, kürzeren Keilabschnitt auf, wobei die Stoßkanten zwischen der Basisfläche und den Seitenflächen im ersten Keilabschnitt zueinander parallel verlaufen und erst im zweiten Keilabschnitt zur freien, nach oben gebogenen Spitze des Keils aufeinander zulaufen.

Der Zahnkeil erhält so eine sich anatomisch bestens anpassende Form, mit der alle Erfordernisse, die an einen Zahnkeil gestellt werden können, abgedeckt sind. Er lässt sich exakt zwischen zwei benachbarten Zähnen plazieren und passt sich dort optimal an die Form der Zähne auch im Bereich von Kavitäten an, und es wird dabei doch ein optimaler Keileffekt erzielt. Durch die säbelförmige Aufbiegung der Keilspitze wird die Zahnfleischpapille am Austrittspunkt des Keiles größtmöglich geschont. Die konkav gewölbte Basisfläche schmiegt sich schonend an die Papille und ergibt neben einem guten Keileffekt auch ein hohes Rückstellvermögen des Keiles, wenn der nach beendeter Behandlung wieder entnommen wird. Durch die Parallelität der Stoßkanten zwischen der Basisfläche und den Seitenflächen im Bereich des ersten, längeren Keilabschnitts wird eine optimale Verkeilung sowohl an den Eintritts- als auch an den Austrittspunkten am Zahnzwischenraum erzielt, auch Einziehungen am Zahnhals werden optimal erfasst.

Nach einer Ausführungsform der Erfindung ist zur Bildung der Eingriffsflächen für die Pinzette oder ein anderes zahnärztliches Greifinstrument in das Endstück eine Bohrung eingebracht.

Vorteilhaft schließt sich an das Endstück noch ein quaderförmiger Sockel an, der ebenfalls von der Bohrung durchdrungen wird.

Vorzugsweise ist die Bohrung als axiale Sackbohrung ausgeführt und wenigstens eine Seitenfläche des Sockels ist als zweite Eingriffsfläche für eine Pinzette oder ein anderes Greifinstrument konkav nach innen gewölbt. Damit kann, wenn der eine Pinzettenarm an der Innenfläche der Bohrung und der andere Pinzettenarm an der Seitenfläche des Sockels angreift ein effektiv hoher, axial gerichteter Druck beim Einpressen des Zahnkeils in den Zahnzwischenraum ausgeübt werden und die erforderliche Keilwirkung erzielt werden.

Auch die Eingriffsfläche für den Greif- oder Pinzettenarm an der Seitenfläche des Sockels kann für einen besseren und sicheren Griff geriffelt sein.

Nach einer anderen Ausführungsform ist die Bohrung als durchgehende Querbohrung ausgeführt und bietet die Eingriffsfläche für den ersten Greif- oder Pinzettenarm; die Eingriffsfläche für den zweiten Greif- oder Pinzettenarm ist dann bevorzugt an der Grundfläche des Endstücks oder Sockels ausgebildet. Auch mit dieser Ausbildung der Eingriffsflächen kann der nötige hohe Druck beim Einpressen des Zahnkeils ausgeübt werden.

Nach einer weiteren Ausführungsform der Erfindung sind zusätzlich oder alternativ in mindestens zwei sich einander gegenüberliegenden Seitenflächen des quaderförmigen Sockels Einbuchtungen als Eingriffsflächen für die Pinzetten- oder Greifarme eingeformt
Wenn die Stoßkanten zwischen der Basisfläche und den Seitenflächen des Keils leicht nach innen abgeschrägt sind, erhält man eine sehr gute Adaptation auch an subgingivalen Füllungsrändern.

Die Basisfläche des Keils kann mit einer Licht reflektierenden Strukturierung, vorzugsweise nach Art eines Katzenauges versehen sein, derart dass das Licht optimal in Richtung auf ein um den zu behandelnden Zahn gelegtes Matrizenband reflektiert wird.

Der Zahnkeil besteht vorzugsweise aus einem thermoplastischen, transparenten Kunststoff (Elastomer) und kann ganz oder teilweise mit einer leichten Einfärbung versehen werden als Farbkodierung für unterschiedliche Keilgrößen.

Die Erfindung wird im folgenden anhand der anhängenden Zeichnungen beispielhaft näher beschrieben; es zeigen
- Fig. 1: bis Fig. 5 einen erfindungsgemäßen Zahnkeil in vier verschiedenen Größen und fünf verschiedenen Ansichten, in Fig. 1 in Vorderansicht mit Blickrichtung auf die Keilspitze, in Fig. 2 in Seitenansicht, in Fig. 3 längs geschnitten, in Fig. 4 in Rückansicht und in Fig. 5 entlang der Linie A-A in Fig. 2 quer geschnitten,
- Fig. 6: einen Längsschnitt durch zwei benachbarte Zähne mit in den Zwischenraum eingeführtem Zahnkeil,
- Fig. 7: den Blick auf die interdentale Fläche eines Zahnes mit anliegendem Zahnkeil,
- Fig. 8: den Querschnitt durch zwei benachbarte Zähne mit eingepresstem Zahnkeil,
- Fig. 9: die Draufsicht auf zwei benachbarte Zähne mit eingepresstem Zahnkeil und seine Handhabung,
- Fig. 10: die Sicht auf den Zahnkeil in Richtung des Pfeiles P in Fig. 9 und
- Fig. 11: stark vergrößert einen Ausschnitt eines Längsschnitts durch zwei benachbarte Zähne mit eingepresstem Zahnkeil.

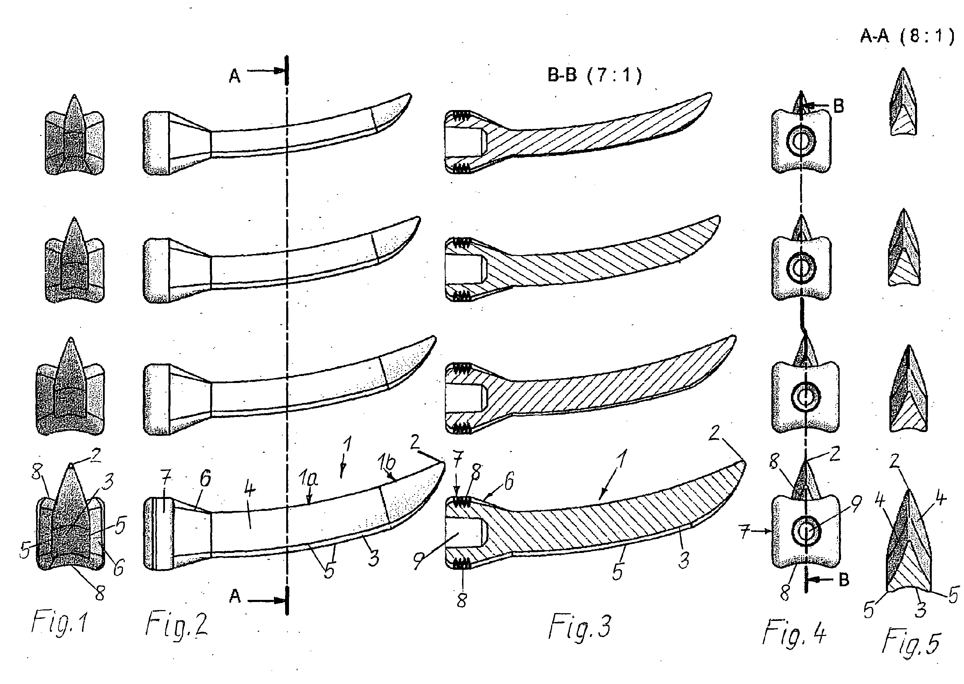

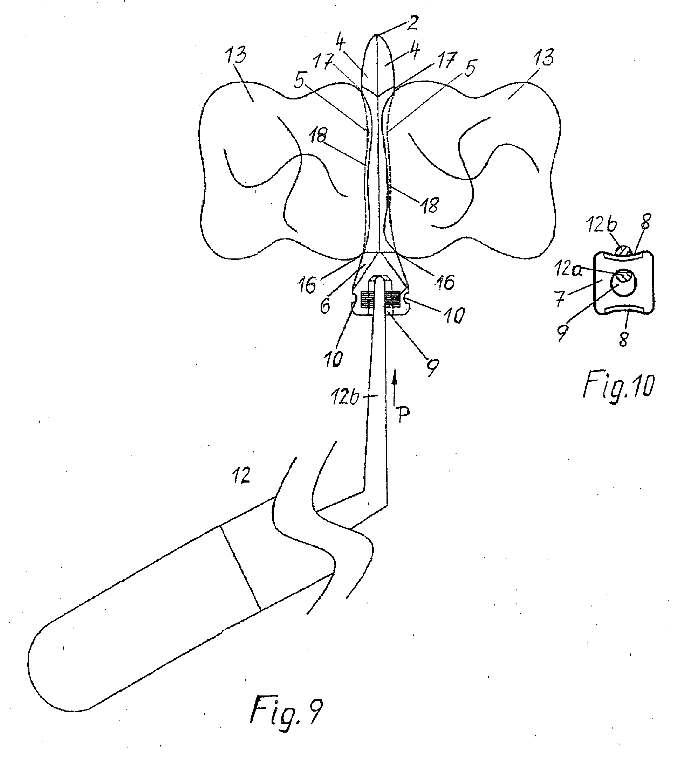

Die Fig. 1 bis 5 zeigen den Zahnkeil in vier verschiedenen Größen aber ansonsten identischer Ausfertigung und in jeweils fünf verschiedenen Ansichten. Der eigentliche Keil 1 ist danach säbelartig aufwärts gebogen (siehe Fig. 1 bis 3) und weist dabei einen ersten, längeren Keilabschnitt 1a und einen zweiten, kürzeren Keilabschnitt 1b auf, der an seinem freien Ende zu einer vorzugsweise abgerundeten, aufwärts gerichteten Spitze 2 ausläuft. Der Keil 1 hat einen dreieckigen Querschnitt (siehe Fig. 5), wobei sowohl die Basisfläche 3 als auch die Seitenflächen 4 konkav eingewölbt sind. Die Stoßkanten 5 der Basisfläche 3 und der beiden Seitenflächen 4 sind vorzugsweise ebenfalls abgerundet. Im ersten Keilabschnitt 1a verlaufen diese Stoßkanten 5 zueinander parallel und erst im zweiten Keilabschnitt 1b zur Spitze 2 aufeinander zu. An seinem von der Spitze 2 abgewandten Ende geht der Keil 1 über in ein sich kegelstumpfförmig oder, wie dargestellt, pyramidenstumpfförmig weitendes Endstück 6, an das sich noch ein quaderförmiger Sockel 7 anschließen kann. Auch die Seitenflächen des Sockels 7 oder vorzugsweise seine sich gegenüberliegenden, obere und untere Seitenfläche 8 können konkav nach innen gewölbt (siehe Fig. 1 und 4) und zusätzlich geriffelt sein (siehe Fig. 3). Vom freien Ende des Sockels 7 her ist in den Sockel 7 und bis in das Endstück 6 reichend eine Sackbohrung 9 eingebracht. Alternativ oder zusätzlich zur Sackbohrung 9 können an zwei sich gegenüberliegenden Seitenflächen 8 des Sockels 7 Einbuchtungen 10 vorgesehen sein, die für ihren Zweck (siehe unten) geriffelt sein können. Wie in Fig. 9 dargestellt, ist es Zweck sowohl der Sackbohrung 9 zusammen mit einer der konkav nach innen gewölbten Seitenflächen 8 des Sockels 7 (siehe dazu auch Fig. 10) als auch, alternativ, der Einbuchtungen 10, die Möglichkeit zu bieten, den Zahnkeil mit einer Pinzette 12 zu erfassen und in den Zwischenraum zwischen zwei benachbarten Zähnen 13 einzustoßen und einzupressen, um dort ein Matrizenband (nicht dargestellt) eng an die Form der Zähne 13 anzupressen und die Zähne 13 dabei um ein gewisses Maß zu spreizen. Wenn, wie in den Fig. 9 und 10 dargestellt, mit dem einen Pinzettenarm 12a in die Bohrung 9 und mit dem anderen Pinzettenarm 12b an eine der konkav gewölbten Seitenflächen 8 gefasst wird, kann beim Einführen des Zahnkeils in axialer Richtung ein sehr hoher Druck ausgeübt werden, der das Einführen und exakte Plazieren in unverrückbarer Position (sowie später auch das Entfernen mit Zug) des Zahnkeils sehr erleichtert und sicher macht.

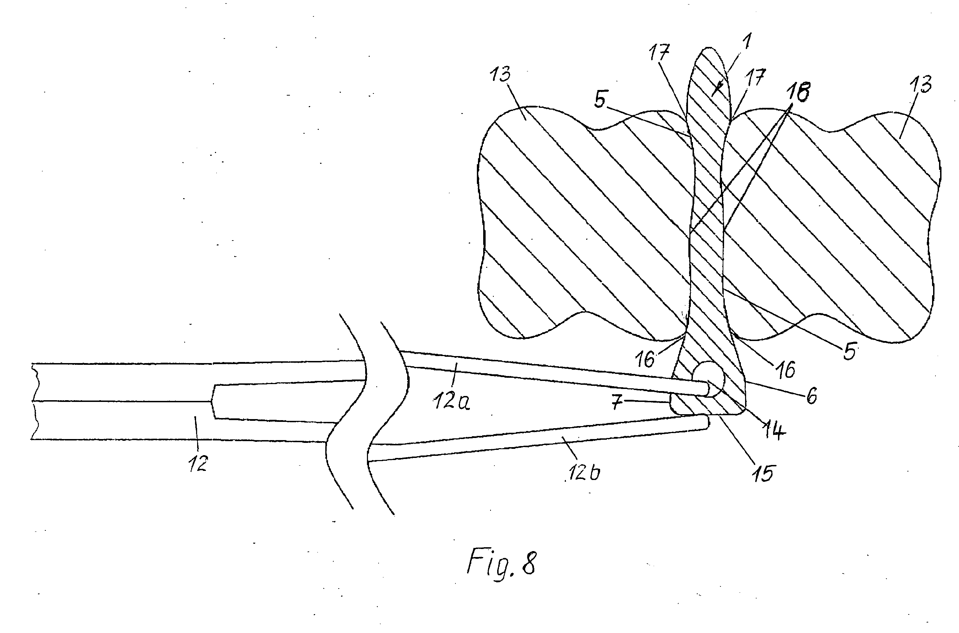

Fig. 8 zeigt eine Variante der Haltemöglichkeit beim Einführen und Entfernen des Zahnkeils. Hier ist im Bereich des sich erweiternden Endstücks 6 und des Sockels 7 eine durchgehende Querbohrung 14 vorgesehen, in die mit dem einen Pinzettenarm 12a eingegriffen werden kann, während der andere Pinzettenarm 12b den Sockel 7 an seiner Grundfläche 15 erfasst. Auch auf diese Weise kann in axialer Richtung des Zahnkeils genügend hoher Druck ausgeübt werden, um denn Zahnkeil fest zwischen die Zähne 13 zu pressen.

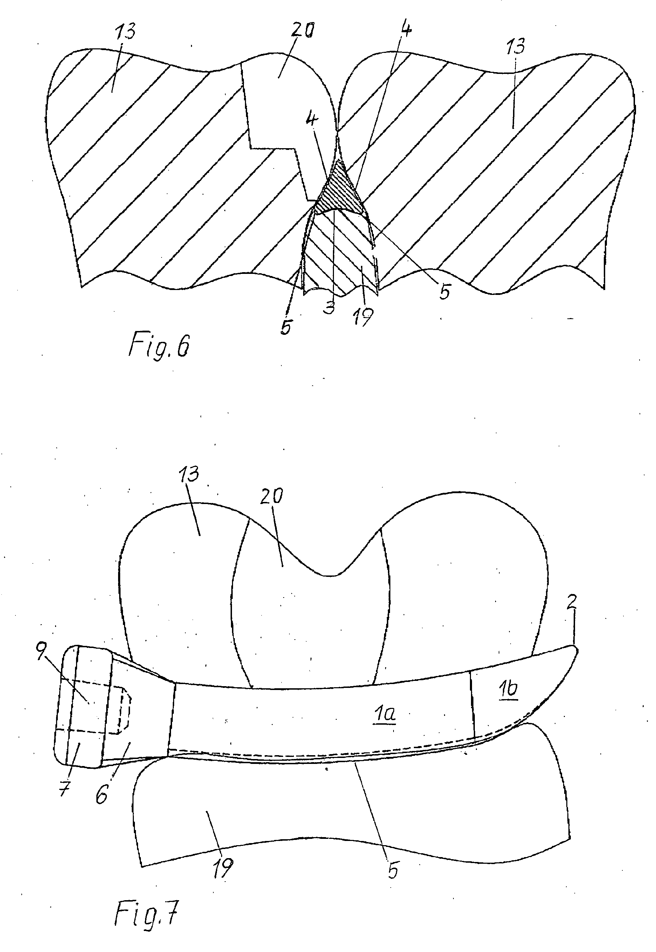

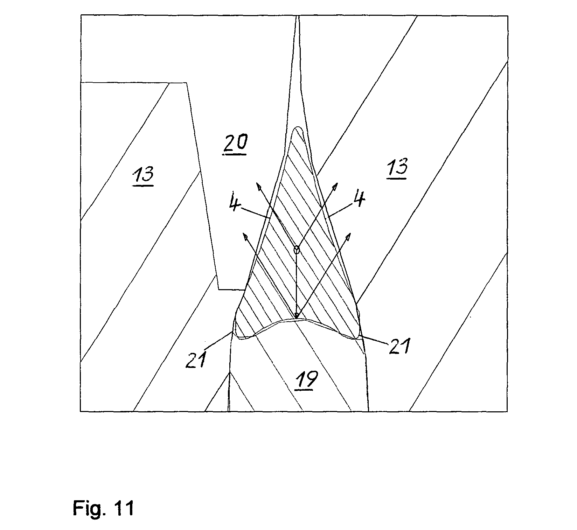

In Fig.8 und 9 ist auch deutlich zu erkennen, wie sich der Keil 1 infolge der Parallelität der Stoßkanten 5 anatomisch besonders gut in den Zahnzwischenraum einfügt und optimal an die Form der beiden benachbarten Zähne 13 anpasst und auch an den Eintrittspunkten 16 und den Austrittspunkten 17 optimal verkeilt; auch Einziehungen 18 am Zahnhals werden optimal erfasst.
Aus der Schnittansicht der Fig. 6 wird deutlich, wie sich der Keil 1 mit seiner konkav nach innen gewölbten Basisfläche 3, die Papille 19 schonend, an diese anschmiegt. Durch die Parallelität der Stoßkanten 5 wird eine perfekte Adaptation auch im Bereich von Kavitäten 20 und ein dennoch guter Keileffekt erreicht. Als weiteren Vorteil ergibt die Form der Basisfläche 3 ein hohes Rückstellvermögen des Keiles 1, wenn er nach abgeschlossener Zahnbehandlung wieder entfernt wird. Die beiden Stoßkanten 5 sind bevorzugt jeweils mit einer Abschrägung 21 versehen (siehe auch Fig. 11); diese Abschrägungen 21 sorgen für eine gute Adaptation eines für die Behandlung um den Zahn gelegten Matrizenbandes (nicht dargestellt) auch bei subgingivalen, also unter dem Zahnfleischrand liegenden, Füllungsrändern. Auch in der Ansicht der Fig. 7 ist zu erkennen, wie sich die gebogene Keilform schonend an die Papille 19 schmiegt und die Kavitätenränder auch interdental optimal verkeilt werden.

Der Zahnkeil ist aus einem thermoplastischen und vorzugsweise transparenten Kunststoff (Elastomer) hergestellt und kann vorteilhaft insgesamt oder partiell, z.B. am Endstück 6 mit Sockel 7 eine leichte Einfärbung als Farbkodierung für die unterschiedlichen Keilgrößen (siehe Fig. 1 bis 5) aufweisen. Bevorzugt die Basisfläche 3 des Keils 1 kann, z.B. durch eine Behandlung mit Funkenerosion, mit einer Strukturierung, beispielsweise nach Art eines Katzenauges, versehen werden, die, wie in Fig. 11 mit Pfeilen angedeutet, für eine optimale Reflektion des Lichtes z.B. auf und durch ein um den zu behandelnden Zahn gelegtes, vorzugsweise ebenfalls transparentes Matrizenband sorgt und so die Arbeit für den Zahnarzt komfortabler macht.

### Bezugszeichenliste:

- 1: Keil
- 1a: erster Keilabschnitt
- 1b: zweiter Keilabschnitt
- 2: Spitze
- 3: Basisfläche
- 4: Seitenfläche (Keil)
- 5: Stoßkanten
- 6: Endstück
- 7: Sockel
- 8: Seitenflächen (Sockel)
- 9: Sackbohrung
- 10: Einbuchtungen
- 11: --
- 12: Pinzette
- 12a, 12b: Pinzettenarme
- 13: Zähne
- 14: Querbohrung
- 15: Grundfläche
- 16: Eintrittspunkte
- 17: Austrittspunkte
- 18: Einziehungen
- 19: Papille
- 20: Kavität
- 21: Abschrägung

## Patentansprüche

1. Zahnkeil zur Verwendung bei der zahnmedizinischen Behandlung und Restauration kariöser Hohlräume zwischen benachbarten Zähnen mit einem dreieckigen Querschnitt und zu einer gerundeten Spitze auslaufendem freien Ende,
**dadurch gekennzeichnet,**
**dass** der eigentliche Keil (1) an seinem von der Spitze (2) abgewandten Ende übergeht in ein sich kegelstumpfförmig oder pyramidenstumpfförmig weitendes Endstück (6), an dem Eingriffsflächen für eine Pinzette (12) oder ein anderes geeignetes, zahnärztliches Greifinstrument ausgebildet sind.

2. Zahnkeil zur Verwendung bei der zahnmedizinischen Behandlung und Restauration kariöser Hohlräume zwischen benachbarten Zähnen mit einem dreieckigen Querschnitt und zu einer gerundeten Spitze auslaufendem freien Ende,
**gekennzeichnet durch** die Kombination folgender Merkmale:
• der Keil (1) ist säbelförmig nach oben gebogen,
• die Basisfläche (3) und die Seitenflächen (4) des Keils (1) sind konkav nach innen gewölbt,
• die Stoßkanten (5) der Basisfläche (3) und der Seitenflächen (4) des Keils (1) sind abgerundet,
• der Keil (1) weist einen ersten, längeren Keilabschnitt (1a) und einen zweiten, kürzeren Keilabschnitt (1b) auf, wobei die Stoßkanten (5) zwischen der Basisfläche (3) und den Seitenflächen (4) im ersten Keilabschnitt (1a) zueinander parallel verlaufen und erst im zweiten Keilabschnitt (1b) zur freien, nach oben gebogenen Spitze (2) des Keils (1) aufeinander zulaufen
und außerdem **dadurch gekennzeichnet,**
**dass** der Keil (1) an seinem von der Spitze (2) abgewandten Ende übergeht in ein sich kegelstumpfförmig oder pyramidenstumpfförmig weitendes Endstück (6), an dem Eingriffsflächen für eine Pinzette (12) oder ein anderes geeignetes zahnärztliches Greifinstrument ausgebildet sind.

3. Zahnkeil nach Anspruch 1 oder 2, **dadurch gekennzeichnet, dass** in das Endstück (6) eine Bohrung (9, 14) eingebracht ist, die dem Erfassen des Zahnkeils mit einer Pinzette (12) oder einem anderen zahnärztlichen Greifinstrument dient.

4. Zahnkeil nach Anspruch 3, **dadurch gekennzeichnet, dass** sich an das Endstück (6) noch ein quaderförmiger Sockel (7) anschließt, der ebenfalls von der Bohrung (9, 14) durchdrungen ist.

5. Zahnkeil nach Anspruch 3 oder 4, **dadurch gekennzeichnet, dass** die Bohrung als axiale Sackbohrung (9) ausgeführt ist.

6. Zahnkeil nach Anspruch 4, **dadurch gekennzeichnet, dass** wenigstens eine Seitenfläche (8) des Sockels (7) als Eingriffsfläche für einen Greif- oder Pinzettenarm (12b) konkav nach innen gewölbt ist.

7. Zahnkeil nach Anspruch 4 oder 6, **dadurch gekennzeichnet, dass** die Eingriffsfläche für den Greif- oder Pinzettenarm (12b) an der Seitenfläche (8)des Sockels (7) geriffelt ist.

8. Zahnkeil nach Anspruch 3 oder 4, **dadurch gekennzeichnet, dass** die Bohrung als durchgehende Querbohrung (14) mit einer Eingriffsfläche für den ersten Greif- oder Pinzettenarm (12a) ausgeführt ist und eine Eingriffsfläche für den zweiten Greif- oder Pinzettenarm (12b) an der Grundfläche (15) des Endstücks (6) oder Sockels (7) ausgebildet ist.

9. Zahnkeil nach Anspruch 1 oder 2, **dadurch gekennzeichnet, dass** sich an das Endstück (6) ein quaderförmiger Sockel (7) anschließt, in dessen mindestens zwei einander gegenüberliegende Seitenflächen (8) Einbuchtungen (10) geformt sind.

10. Zahnkeil nach Anspruch 1 oder 2, **dadurch gekennzeichnet, dass** die Stoßkanten zwischen der Basisfläche (3) und den Seitenflächen (4) des Keils (1) abgeschrägt (21) sind.

11. Zahnkeil nach Anspruch 1 oder 2, **dadurch gekennzeichnet, dass** die Basisfläche (3) des Keils (1) eine Licht reflektierende Strukturierung aufweist.

12. Zahnkeil nach Anspruch 1 oder 2, **dadurch gekennzeichnet, dass** die Basisfläche (3) des Keils (1) eine Licht reflektierende Strukturierung nach Art eines Katzenauges aufweist.

13. Zahnkeil nach Anspruch 1 oder 2, **dadurch gekennzeichnet, dass** er aus einem thermoplastischen, transparenten Kunststoff (Elastomer) besteht.

14. Zahnkeil nach Anspruch 13, **dadurch gekennzeichnet, dass** er ganz oder teilweise mit einer leichten Einfärbung versehen ist als Farbkodierung für unterschiedlich Keilgrößen.
